(19)

Europäisches Patentamt
European Patent Office
Office européen des brevets

(11)  **EP 1 716 762 B1**

(12)  **EUROPEAN PATENT SPECIFICATION**

(45) Date of publication and mention
of the grant of the patent:
**25.05.2011  Bulletin 2011/21**

(51) Int Cl.:
*A23G 9/32* (2006.01)     *A23G 9/22* (2006.01)

(21) Application number: **06075778.8**

(22) Date of filing: **31.03.2006**

(54) **Methods for production of frozen aerated confections**

Verfahren zur Herstellung von gefrorenen belüfteten Süssspeisen

Procédé de fabrication de confiserie glacée aerée

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **19.04.2005  EP 05252453**

(43) Date of publication of application:
**02.11.2006  Bulletin 2006/44**

(73) Proprietors:
• **Unilever PLC
London
EC4Y 0DY (GB)**
Designated Contracting States:
**CY GB IE**
• **Unilever N.V.
3013 AL Rotterdam (NL)**
Designated Contracting States:
**AT BE BG CH CZ DE DK EE ES FI FR GR HU IS IT
LI LT LU LV MC NL PL PT RO SE SI SK TR**

(72) Inventor: **Quail, Patricia Jill
Sharnbrook
Bedfordshire MK44 1LQ (GB)**

(74) Representative: **Hugot, Alain et al
Unilever Patent Group
Colworth House
Sharnbrook
Bedford, MK44 1LQ (GB)**

(56) References cited:
**EP-A- 1 212 948        WO-A-00/72697
DE-A1- 10 016 786     US-A- 3 949 102
US-A- 5 345 781        US-A1- 2005 037 111
US-A1- 2005 042 333**

• **PATENT ABSTRACTS OF JAPAN vol. 006, no. 106
(C-108), 16 June 1982 (1982-06-16) -& JP 57
036944 A (LOTTE CO LTD), 27 February 1982
(1982-02-27)**
• **PATENT ABSTRACTS OF JAPAN vol. 2003, no.
12, 5 December 2003 (2003-12-05) -& JP 2003
250455 A (MEIJI MILK PROD CO LTD), 9
September 2003 (2003-09-09)**
• **PATENT ABSTRACTS OF JAPAN vol. 017, no. 315
(C-1071), 16 June 1993 (1993-06-16) -& JP 05
030902 A (ASAHI YUSHI KK), 9 February 1993
(1993-02-09)**

## Description

### Technical Field of the invention

The present invention relates to a method for producing frozen aerated confections, such as ice cream. In particular, it relates to a method for manufacturing frozen aerated confections containing oils which are high in polyunsaturated fat by low temperature extrusion.

### Background to the invention

Frozen aerated confections, such as ice creams, sorbets and the like are popular foodstuffs. Typically they are aerated to an overrun of about 100%. Fat is an important constituent of such confections. Fats which are at least about 50% crystalline at 5°C are conventionally considered essential for the production of good quality ice cream which can be aerated to the desired overrun (see for example page 69 of "Ice Cream", 6th Edition R.T. Marshall, H.D. Goff and R.W. Hartel, Kluwer Academic / Plenum Publishers, New York 2003). Fats such as dairy fat and coconut oil are therefore used. However, these fats contain high proportions of saturated fat (typically 60-65% and 90% respectively). Briefly, the reasons for using these fats are as follows.

The standard manufacturing process for frozen aerated confections is described in detail in, for example, "Ice Cream", 6th Edition, chapters 6, 7 and 9. It consists of a number of steps: (i) mixing the ingredients, (ii) pasteurisation and homogenisation, (iii) ageing, (iv) aerating and partially freezing the mix in an ice cream freezer (v) drawing the partially frozen aerated confection from the freezer and (vi) hardening. After pasteurization and homogenisation the fat exists as small droplets. During freezing and aeration, the mix is sheared. The shear causes the fat droplets collide with each other. When the fat droplets are partly liquid and partly solid, they partially coalesce, i.e. they form a cluster but retain some of their individual identity. Partially coalesced fat (also known as destabilized or de-emulsified fat) stabilizes the air bubbles. Increasing the amount of shear on the mix increases the degree of partial coalescence. Saturated fats are conventionally used because they are mostly solid at the temperatures at which freezing and aeration take place in an ice cream freezer, and therefore they undergo partial coalescence. Liquid fat droplets on the other hand coalesce completely to form a single large spherical droplet, which leads to an unstable air phase resulting in low overrun.

Health-conscious consumers are now looking for frozen aerated confections which have all the properties of these traditional products but which are healthier. Attempts have therefore been made to produce frozen aerated confections in which saturated fats are replaced by polyunsaturated fats. However, it has not been possible simply to replace the saturated fats in ice cream formulations with unsaturated fats (which are liquid at ambient temperatures) because unsaturated fats do not contain sufficient solid fat. The mix is difficult to aerate in the ice cream freezer and as a result, the ice cream has a very low overrun. Furthermore, the resulting product lacks the structure provided by the partially coalesced fat and therefore suffers from poor texture and rapid meltdown.

WO 97/30600 discloses an unaerated ice cream formulated with sunflower oil and mono/di-glycerides. Since the ice cream is unaerated, there is no need to use solid fat.

EP-A 1212948 discloses aerated ice cream compositions which comprise a fat component having liquid properties at processing temperatures and a process for preparing such compositions by cold extrusion. The proportion of the fat phase which is liquid at -5°C is from 45 to 55% w/w. A blend of walnut oil and butterfat having a liquid fat content of 53% w/w at -5°C is exemplified. This blend has a polyunsaturated fatty acid content of 27%.

Japanese Patent Application 57/036944 describes the production of ice cream with oils that are high in polyunsaturated fatty acids, such as safflower oil and sunflower oil. It was found that an overrun of only 30% could be achieved with a standard formulation containing a conventional emulsifier. To overcome the problem of producing good ice cream with liquid fat, it was found necessary to use a specific emulsifier, namely a sucrose fatty acid ester. However, such additives can detract from the natural and healthy perception of the product by consumers.

There remains a need therefore to provide frozen aerated confections containing high levels of polyunsaturated fats which have good processing and consumer properties (such as aeration, texture and meltdown), but which do not suffer from this disadvantage.

### Tests and Definitions

Unless defined otherwise, all technical and scientific terms used herein have the same meaning as commonly understood by one of ordinary skill in the art (e.g. in frozen confectionery manufacture). Definitions and descriptions of various terms and techniques used in frozen confectionery manufacture are found in "Ice Cream", 6th Edition. With the exception of percentages cited in relation to the overrun, all percentages, unless otherwise stated, refer to the approximate percentage by weight of the total composition.

Frozen aerated confection

The term "frozen aerated confection" as used in this specification means a sweet-tasting fabricated foodstuff intended for consumption in the frozen state (i.e. under conditions wherein the temperature of the foodstuff is less than 0°C, and preferably under conditions wherein the foodstuff comprises a significant amount of ice). The term "aerated" means that the frozen confection has an overrun of at least 30%. Frozen aerated confections are made by freezing a pasteurised mix of ingredients. Overrun is typically produced by intentionally incorporating gas into the product, such as by mechanical agitation. The gas can be any food-grade gas such as air, nitrogen or carbon dioxide. Typical examples of frozen aerated confections include ice creams.

Fats

Fats are largely made up of triglycerides (approximately 98%), together with minor amounts of other components such as phospholipids and diglycerides. Triglycerides are esters of glycerol with three fatty acids. Fatty acids which have no carbon-carbon double bonds are said to be saturated (herein abbreviated as SAFA), whereas fatty acids that contain one or more carbon-carbon double bonds are said to be monounsaturated (abbreviated as MUFA) and polyunsaturated (PUFA) respectively. Fats that are liquid at ambient temperatures are often referred to as oils. In this specification the term "fat" includes such oils. The SAFA, MUFA and PUFA contents of fats and oils are given in "The Lipid Handbook", Second Edition, Authors Frank D Gunstone, John L Harwood, Fred B Padley, published by Chapman & Hall 1994.

Proteins

Proteins include milk proteins, soy protein, wheat protein, barley protein and lupin protein. Sources of milk protein include milk, concentrated milk, milk powders (such as skimmed milk powder), caseins, caseinates (such as sodium and/or calcium caseinates) whey, whey powders and whey protein concentrates/isolates. Sources of milk protein generally also comprise other materials. For example, skimmed milk powder typically comprises 37% milk protein, 55% lactose and 8% milk minerals.

Sweetener

Sweetener means a mono-, di- or oligo-saccharide containing from three to ten monosaccharide units joined in glycosidic linkage, or a corn syrup, or a sugar alcohol, or a mixture thereof. Sweeteners include sucrose, fructose, lactose (for example from the source of milk protein), dextrose, invert sugar, corn syrup and sorbitol.

Free Sugars

The term "free sugars" is defined as in "Diet, nutrition and the prevention of chronic diseases" - Report of a Joint WHO/FAO Expert Consultation, WHO Technical Report Series 916, WHO, Geneva, 2003. Thus free sugars are all mono and disaccharides added by the manufacturer, cook or consumer plus sugar naturally present and sourced from honey, syrups and juices. Free sugars do not include sugars naturally present and sourced from fruit or milk.

Emulsifiers

Emulsifiers are described in "Ice Cream", 6th Edition, pages 85-86. Emulsifiers include mono- and di-glycerides of saturated or unsaturated fatty acids (e.g. monoglyceryl palmitate - MGP), polyoxyethylene derivatives of hexahydric alcohols (usually sorbitol), glycols, glycol esters, polyglycerol esters, sorbitan esters, stearoyl lactylate, acetic acid esters, lactic acid esters, citric acid esters, acetylated monoglyceride, diacetyl tartaric acid esters, polyoxyethylene sorbitan esters (such as polysorbate 80), sucrose esters, lecithin, egg and egg yolk. The term also includes mixtures of any the above. As pointed out above, fats and oils may include small amounts of substances such as mono or diglycerides or phospholipids. The term "emulsifier" does not include such molecules when they are naturally present in the fat in small quantities.

Low temperature extrusion

Low temperature extrusion is a process which can be used the manufacture of ice cream, and is described for example in US 5,345,781, WO 00/72697, "Ice Cream", 6th Edition, page 190 and "The Science of Ice Cream", C. Clarke, Royal Society of Chemistry, Cambridge, 2004, pages 81-82. In low temperature extrusion, aerated, partially frozen ice cream leaves the ice cream freezer and is passed through a screw extruder as it is cooled to typically -15°C. The extruder applies a higher shear stress (and lower shear rate) to the ice cream than a conventional freezer, which means that it can operate at low temperatures when the ice cream has very high viscosity. The higher shear stress also enhances fat droplet coalescence. The extrusion apparatus may be either a single or twin screw.

Overrun

The overrun of ice cream (and other frozen aerated confections) is defined by

$$\text{overrun \% =} \frac{\text{density of mix - density of ice cream}}{\text{density of ice cream}} \times 100$$

Overrun is measured at atmospheric pressure.

Measuring overrun

The density of the unaerated mix is determined by weighing a standard overrun cup containing mix at approximately 4°C, subtracting the mass of the cup and dividing by the known volume of the cup (density = mass/volume). A minimum of three repeat measurements is taken. The density of the (aerated) ice cream is determined by repeating the procedure using the same overrun cup with freshly extruded ice cream. Again a minimum of three repeat measurements is taken. With a knowledge of the density of both unaerated mix and aerated ice cream, the overrun can be calculated using the equation given above.

Meltdown

Resistance to meltdown and to serum leakage is determined by measuring the rate at which ice cream melts in a constant temperature environment, as follows. Stainless steel wire mesh grids having a size of 25 x 25 cm, with 3 mm holes, 1 mm thick wire are placed on a 60° funnel with a bore size of 2cm suspended over a collecting vessel (of large enough volume to collect the entire sample tested). The collecting vessel is placed on a balance for weighing the material collected in the vessel. The balances are connected to a data logging system to record the mass collected. The apparatus consisting of grid, funnel, vessel and balance, is contained in a cabinet set at a constant temperature of 20°C. The cabinet is capable of holding up to 12 of these sets of apparatus simultaneously.

Ice cream samples in the form of rectangular blocks measuring 14.5 x 9 x 3.8cm are equilibrated in a freezer at -25 °C, and then weighed on a zeroed balance with the grid (one of the largest flat faces of the sample is in contact with the grid). The samples are then arranged randomly over the available positions in the meltdown cabinet. Once all samples are in place on the funnels, the data logging system records the amount of collected material every minute. From the mass of the sample collected over this period, the percentage mass loss of the samples is calculated using the following formula.

$$\text{\%MassLoss} = \frac{M_t - M_0}{F} \times 100$$

wherein:

$M_t$ = mass recorded on the balance (gram) at time t minute
$M_0$ = mass recorded on the balance (gram) at start of analysis, t = 0 minute
F = Initial mass of product (gram)

Meltdown initiation time

The meltdown initiation time is defined as the time that elapses before 4% of the initial weight of the sample has dropped into the collecting vessel. At least three samples are measured per product, and the mean of these is recorded.

**Brief description of the invention**

Processing ice cream made from highly unsaturated fats in a conventional ice cream freezer is known to result in an unstable fat phase. Contrary to the expectation that using a low temperature extruder would result in an even more unstable fat phase as a result of the higher shear stress, we have found that the ice cream thus produced actually has good overrun, texture and meltdown. Accordingly in a first aspect the present invention provides a process for manufacturing a frozen aerated confection comprising the steps of:

a) producing a mix comprising water, a fat component in which at least 35% by weight of the fatty acids in the fat component are polyunsaturated fatty acids, protein and sweetener;
b) homogenising and pasteurising the mix; and
c) freezing and aerating the mix in an ice cream freezer to form a partially frozen aerated confection;
characterized in that after step c), the partially frozen aerated confection is further frozen in a low temperature extruder, and wherein the frozen aerated confection leaves the low temperature extruder at a temperature of below -9°C.

Preferably the frozen aerated confection leaves the low temperature extruder at a temperature of below -10°C or -12°C most preferably below -14°C. It has been found that the lower the temperature at which the frozen aerated confection leaves the extruder, the slower its meltdown.

Preferably the low temperature extruder is a single screw or a twin screw extruder. More preferably the low temperature extruder is a single screw extruder.

Optionally, the frozen aerated confection may be hardened after low temperature extrusion. Typically the hardening temperature is in the range -17 to -40°C, preferably - 20 to -35°C.

The higher the amount of polyunsaturated fatty acids, the greater the health benefit. Thus it is preferable that the fat comprises at least 40% polyunsaturated fatty acids by weight of the fat, more preferably at least 45% or 50% and optimally at least 60%.

Preferably the fat comprises at least 80% more preferably at least 90%, and even more preferably at least 95% by weight of the fat of a vegetable oil selected from the group consisting of sunflower oil, safflower oil, linseed oil, soybean oil, walnut oil, corn oil, grape seed oil, sesame oil, wheat germ oil, cottonseed oil and mixtures thereof. Particularly preferred is sunflower oil owing to its clean flavour, high poly-unsaturated fat content and wide availability.

Preferably the fat component comprises at least 2% fat by weight of the confection, more preferably at least 4% and most preferably at least 6%. Preferably the fat component comprises at most 15% fat by weight of the confection, more preferably at most 12% and most preferably at most 10%.

Preferably the overrun is at least 60%, more preferably at least 70%, most preferably at least 80%. It is preferable that the overrun does not exceed 200%, however, otherwise the confection does not exhibit the cold mouth-feel conventionally associated with frozen confections. More preferably the overrun is less than 150%, most preferably less than 130%.

In order to aid in aeration during manufacture of the frozen confection it is preferable that the confection comprises protein in an amount of at least 1% by weight of the frozen confection, more preferably greater than or equal to 2%. In order to prevent the confection from exhibiting a chalky mouth-feel, however, it is also preferable that the protein content is less than or equal to 8%, more preferably less than or equal to 6% by weight of the frozen confection.

Preferably the protein is selected from the group consisting of milk protein, soy protein, wheat protein, barley protein and lupin protein and mixtures thereof. More preferably the protein is milk protein. Milk proteins have superior flavour, heat stability and surface activity.

In order to provide the customary sweetness associated with frozen aerated confections and to avoid the confection being unduly hard, it is preferable that the frozen aerated confection comprises sweeteners in an amount of at least 10% by weight of the frozen confection, more preferably at least 15%, most preferably at least 17%. To avoid the frozen aerated confection being too sweet, the amount of sweeteners should be at most 35%, preferably at most 30%, most preferably at most 25% by weight of the confection.

A preferred sweetener is lactose, especially when added as part of the milk solids. This is because lactose has a relatively low molecular weight (and therefore provides excellent freezing point depression) but is neither overly sweet nor counted among the unhealthy free sugars (when added as part of the milk solids). Thus it is preferable that lactose is present in an amount of at least 3% by weight of the frozen confection, preferably at least 4%. In order to avoid crystallisation of the lactose, however, it is also preferred that the lactose is present in an amount of less than 9%, preferably less than 8% by weight of the frozen confection.

In order to increase the appeal of the frozen aerated confection to health conscious consumers, it is preferable that the amount of free sugars is less than 17% by weight of the frozen aerated confection, preferably less than 15%.

The frozen aerated confections may include emulsifiers. However, we have found that the frozen confections can be aerated even in the absence of emulsifiers and, in general, the air phase is actually more stable in the absence of emulsifiers. Thus in a preferred embodiment the frozen aerated confection is substantially free from emulsifier. In particular, the frozen aerated confection comprises less than 0.04%, more preferably less than 0.02%, even more preferably less than 0.01% total emulsifier by weight of the frozen confection. Most preferably, the frozen aerated confection comprises no emulsifier. Emulsifiers can also detract from the natural image of the product.

The frozen aerated confections may include optional ingredients e.g. stabilisers such as alginates, gum arabic, gum ghatti, gum karaya, gum tragacanth, locust bean gum, carrageenans, xanthan gum, guar gum, gelatine, agar, sodium carboxymethylcellulose, microcrystalline cellulose, methyl and methylethyl celluloses, hydroxypropyl and hydroxypropylmethyl celluloses, low and high methoxyl pectins and mixtures thereof.

The frozen aerated confections may also include colours and flavours. We have found that frozen aerated confections according to the invention have a good taste even though they contain no milk fat provided that flavours are added.

In a second aspect the present invention provides a frozen aerated confection comprising water, a fat component in which at least 35% by weight of the fatty acids in the fat component are polyunsaturated fatty acids, protein and sweetener, which confection has a meltdown initiation time of greater than 35 minutes, preferably greater than 50 minutes, more preferably greater than 70 minutes when measured at 20°C in the test described above. We have found that ice creams made from fats rich in polyunsaturated acids have increased meltdown initiation times when they are produced by low temperature extrusion.

**Detailed description of the invention**

The present invention will be further described in the following examples which are illustrative only and non-limiting, and by reference to the figures which show meltdown results for ice creams processed conventionally and according to the invention.

Figure 1 is a plot of the meltdown results for ice creams with formulation 1 drawn from the ice cream freezer at -5.6°C (comparative example) and from the low temperature extruder at temperatures of -12.0, -12.9, -14.1 and -14.6°C.

Figure 2 is a plot of the meltdown results for ice creams with formulation 2 drawn from the ice cream freezer at -5.8°C (comparative example) and from the low temperature extruder at -11.0 and-13.3°C.

Figure 3 is a plot of the meltdown results for ice creams with formulation 3 drawn from the ice cream freezer at -5.0°C (comparative example) and from the low temperature extruder at -9.7 and-11.5°C.

Figure 4 is a plot of the meltdown results for ice creams with formulation 4 drawn from the ice cream freezer at -5.3°C (comparative example) and from the low temperature extruder at -9.0 and-11.5°C.

**Examples**

Ice creams were prepared from four different ice cream formulations labelled 1-4 in Table 1. These differ in their sugars, total solids and flavours, and include formulations with and without emulsifier.

Table 1 Formulations of the example mixes (ingredient amounts are % w/w).

| Ingredient (% w/w) | 1 | 2 | 3 | 4 |
|---|---|---|---|---|
| Skim milk powder | 5.0 | 5.0 | 5.0 | 5.0 |
| Whey powder 30% | 5.0 | 5.0 | 5.0 | 5.0 |
| Sucrose | 5.0 | 5.0 | 11.0 | 10.5 |
| Dextrose | 5.8 | 5.8 | | |
| Fructose | 4.4 | 4.4 | | |
| Raftilose P95 | 4.0 | 4.0 | | |
| 63DE corn syrup | | | 10.5 | 10.5 |
| 28DE corn syrup | | | | 4.0 |
| Locust bean gum | 0.25 | 0.25 | 0.25 | 0.25 |
| Guar gum | 0.11 | 0.11 | 0.11 | 0.11 |
| Carrageenan L100 | 0.035 | 0.035 | 0.035 | 0.035 |
| Sunflower oil | 8.0 | 8.0 | 8.0 | 8.0 |

(continued)

| Ingredient (% w/w) | 1 | 2 | 3 | 4 |
|---|---|---|---|---|
| HP60 | 0.2 | | | |
| Strawberry flavour | 0.5 | | | |
| Beetroot red | 0.14 | | | |
| Vanillin | | 0.012 | 0.012 | 0.012 |
| Vanilla flavour | | 0.1729 | 0.1729 | 0.1729 |
| Water | to 100 | to 100 | to 100 | to 100 |

Raftilose P95 is 95% oligofructose in powder form supplied by Orafti. HP60 is saturated mono-diglyceride containing 60% monoglyceride supplied by Danisco. The corn syrups were supplied by Cerestar. 63DE is a glucose-fructose syrup (C*Sweet F 017Y4) containing 22% water, 55% mono and disaccharides and 23% other solids. 28DE is a spray-dried glucose syrup (C*Dry GL01924) containing 4% water, 14% mono and disaccharides and 82% other solids.
The mixes were prepared as follows. Water at 80°C was added into a tank equipped with a turbo mixer. The dry sugars were mixed with the stabilisers and added to the tank followed by the skimmed milk powder, liquid sugars, oil and flavours. The mix was blended for about 10 minutes at 60-70°C. The mix was then homogenised at 150 bar and pasteurised at 82°C for 25 seconds in a plate heat exchanger. The mix was then cooled to 4°C in the plate heat exchanger and aged overnight in an ageing tank at 4°C, with gentle stirring.
The mixes were aerated (with a target overrun of 100%) and frozen on an ice cream freezer (Crepaco WO4 scraped surface heat exchanger) fitted with a series 15 open dasher. Partially frozen ice cream was drawn from the freezer at between -6.5 and - 7.5°C and passed to a low temperature single screw extruder. On leaving the extruder, the ice cream was filled into 500ml cardboard boxes, blast frozen at -35°C for 3 hours and then stored at -25°C until required for testing. Comparative examples were made by the conventional process, in which partially frozen ice cream was drawn from the freezer at between -5 and -6°C, filled into 500ml cardboard boxes, blast frozen at -35°C for 3 hours and then stored at -25°C.
The temperature at which the ice cream leaves the screw extruder is controlled by the torque on the screw which is automatically coupled to the refrigerating power. Higher torque allows ice cream to be extruded at higher viscosity (i.e. lower temperature). Torques of 500, 750, 900 and 1200Nm were used. The torque and extrusion temperature for each formulation are shown in Table 2.

Table 2 Processing conditions for the examples according to the invention

| | Extrusion temperature (°C) | | | |
|---|---|---|---|---|
| Torque (Nm) | 1 | 2 | 3 | 4 |
| 500 | -12.0 | -11.0 | -9.7 | -9.0 |
| 750 | -12.9 | -13.3 | -11.5 | -11.5 |
| 900 | -14.1 | | | |
| 1200 | -14.6 | | | |

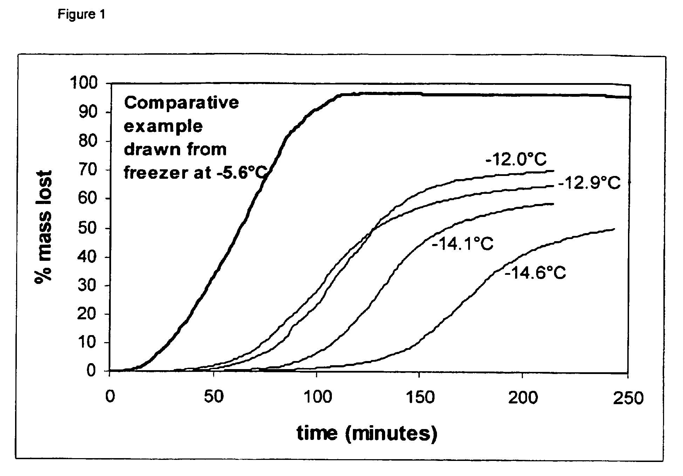

Formulations 1-4 processed very well through the ice cream freezer and through the low temperature extruder for all the processing regimes. The ice cream flow was generally smooth and continuous with reasonably constant overrun and few air pockets. The overrun was measured using an overrun cup as described above. Both the low temperature extruded ice creams according to the invention and the comparative examples achieved the target overrun of 100% (+/- 10%).
Meltdown tests as described above were performed on each sample. The meltdown data are shown in figures 1-4. The data for the examples according to the invention are labelled by the extrusion temperature from the low temperature screw extruder. Data for the comparative examples is shown by the thick lines and labelled by the temperature at which the ice cream was drawn from the ice cream freezer.
Figure 1 shows that for formulation 1 the meltdown behaviour is better (i.e. the ice cream loses mass more slowly) for ice cream which has been through the low temperature extruder than for the comparative example of ice cream which had not been through the extruder. The meltdown improves as the exit temperature from the extruder is reduced. The slowest meltdown is achieved with the lowest exit temperature (-14.6°C).

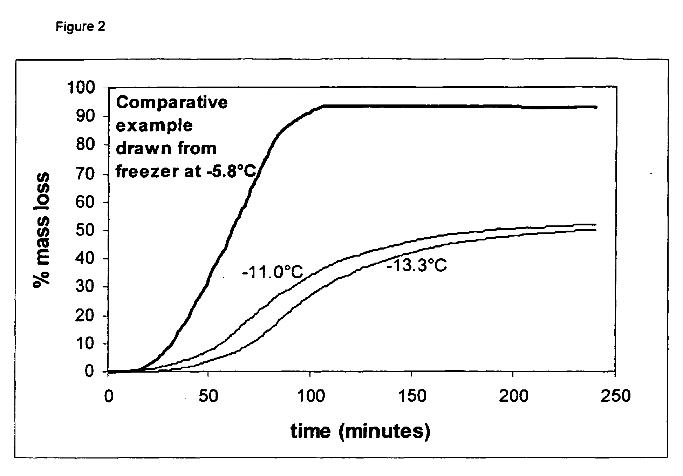

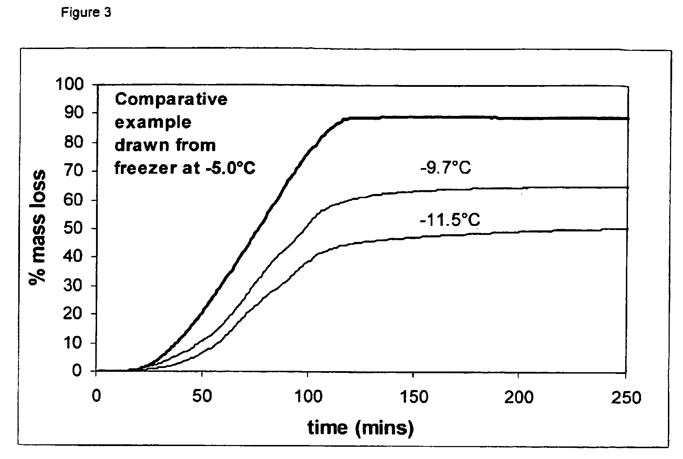

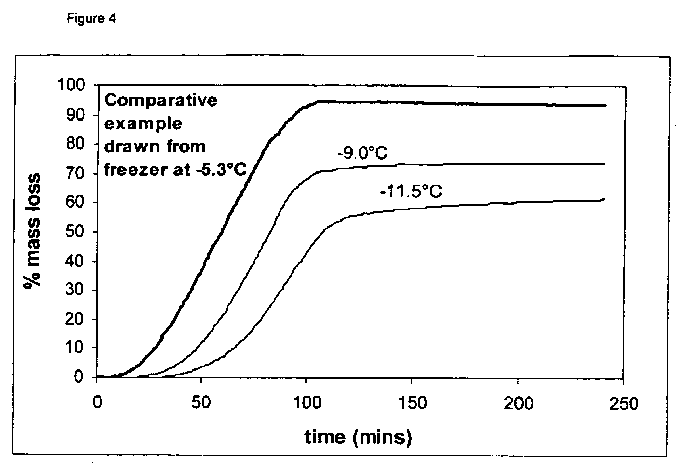

Figure 2 shows that for formulation 2 (no emulsifier), the meltdown behaviour is again better for ice cream which has been through the low temperature extruder than for the comparative example. Figures 3 and 4 show similar results for formulations 3 (different sweeteners and no emulsifier) and 4 (higher solids and no emulsifier). In each case, the slowest meltdown is achieved with the lowest extrusion temperature.

Table 3 shows the extrusion temperature and meltdown initiation time for each sample. It is apparent from this data that ice creams made with a fat rich in PUFA have longer meltdown initiation times when they have been processed in a low temperature extruder, (36 minutes or greater) compared to the ice cream produced by the conventional process (21 - 30 minutes). The lower the extrusion temperature, the longer the meltdown initiation time. The lowest extrusion temperature (-14.6°C for formulation 1) had the longest meltdown initiation time (129 minutes).

Table 3 Extrusion temperature and meltdown initiation time for each sample

| Formulation | Extrusion temperature (°C) | Meltdown initiation time (minutes) |
|---|---|---|
| 1 | Comparative Example | 21 |
| | -12.0<br>-12.9<br>-14.1<br>-14.6 | 74<br>63<br>97<br>129 |
| 2 | Comparative Example | 24 |
| | -11.0<br>-13.3 | 41<br>51 |
| 3 | Comparative Example | 30 |
| | -9.7<br>-11.5 | 36<br>46 |
| 4 | Comparative Example | 21 |
| | -9.0<br>-11.5 | 38<br>51 |

The ice cream samples were also tasted. Ice creams produced according to the invention had a smooth texture and good flavour and were preferred by an informal taste panel over the conventionally processed comparative examples.

In summary, these results show that ice creams made with a fat rich in PUFA have improved meltdown properties and texture when they have been through a low temperature extruder, compared to the ice cream produced by the conventional process. The lower the extrusion temperature, the slower the meltdown.

The various features of the embodiments of the present invention referred to in individual sections above apply, as appropriate, to other sections *mutatis mutandis.* Consequently features specified in one section may be combined with features specified in other sections as appropriate.

All publications mentioned in the above specification are herein incorporated by reference. Various modfications and variations of the described methods and products of the invention will be apparent to those skilled in the art without departing from the scope of the invention. Although the invention has been described in connection with specific preferred embodiments, it should be understood that the invention as claimed should not be unduly limited to such specific embodiments. Indeed, various modifications of the described modes for carrying out the invention which are apparent to those skilled in the relevant fields are intended to be within the scope of the following claims.

**Claims**

1.  A process for manufacturing a frozen aerated confection comprising the steps of:

    a) producing a mix comprising water, a fat component in which at least 35% by weight of the fatty acids in the fat component are polyunsaturated fatty acids, protein and sweetener;
    b) homogenising and pasteurising the mix; and
    c) freezing and aerating the mix in an ice cream freezer to form a partially frozen aerated confection; **characterized in that** after step c), the partially frozen aerated confection is further frozen in a low temperature extruder, and wherein the frozen aerated confection leaves the low temperature extruder at a temperature of below 9°C.

**2.** A process according to claim 1 wherein the low temperature extruder is a single screw or a twin screw extruder.

**3.** A process according to any preceding claim wherein the fat component comprises at least 80% by weight of the fat of a vegetable oil selected from the group consisting of sunflower oil, safflower oil, linseed oil, soybean oil, walnut oil, com oil, grape seed oil, sesame oil, wheat germ oil, cottonseed oil and mixtures thereof.

**4.** A process according to claim 3 wherein the fat component is sunflower oil.

**5.** A process according to any preceding claim wherein the fat component constitutes from 2 to 15%by weight of the frozen aerated confection.

**6.** A process according to any preceding claim wherein the frozen aerated confection has an overrun of from 60 to 200%.

**7.** A process according to any preceding claim wherein the protein constitutes from 1 to 8% by weight of the frozen aerated confection.

**8.** A process according to any preceding claim wherein the protein is selected from the group consisting of milk protein, soy protein, wheat protein, barley protein and lupin protein and mixtures thereof.

**9.** A process according to claim 8 wherein the protein is milk protein.

**10.** A process according to any preceding claim wherein the sweetener constitutes from 10 to 35% by weight of the frozen aerated confection.

**11.** A process according to any preceding claim wherein the free sugars constitute less than 17% by weight of the frozen aerated confection.

**12.** A process according to any preceding claim wherein the frozen aerated confection contains no emulsifier.

**Patentansprüche**

**1.** Verfahren zur Herstellung einer tiefgekühlten, belüfteten Süßspeise, umfassend die Schritte:

a) Herstellen einer Mischung, die Wasser, eine Fettkomponente, bei der wenigstens 35 Gewichts-% der Fettsäuren in der Fettkomponente mehrfach ungesättigte Fettsäuren sind, Protein und Süßungsmittel umfasst,
b) Homogenisieren und Pasteurisieren der Mischung und
c) Tiefkühlen und Belüften der Mischung in einem Eiscreme-Gefriergerät unter Bildung einer teilweise tiefgekühlten, belüfteten Süßspeise, **dadurch gekennzeichnet, dass** nach Schritt c) die teilweise tiefgekühlte, belüftete Süßspeise weiter in einem Niedrigtemperatur-Extruder tiefgekühlt wird und wobei die tiefgekühlte, belüftete Süßspeise den Niedrigtemperatur-Extruder bei einer Temperatur von unter -9 °C verlässt.

**2.** Verfahren nach Anspruch 1, wobei der Niedrigtemperatur-Extruder ein Einschnecken- oder Doppelschnecken-Extruder ist.

**3.** Verfahren nach einem vorangehenden Anspruch, wobei die Fettkomponente wenigstens 80 Gewichts-%, bezogen auf das Fett, eines Pflanzenöls, ausgewählt aus der Gruppe, bestehend aus Sonnenblumenöl, Safloröl, Leinsamenöl, Sojabohnenöl, Walnussöl, Maisöl, Traubenkernöl, Sesamöl, Weizenkeimöl, Baumwollsamenöl und Gemischen davon, umfasst.

**4.** Verfahren nach Anspruch 3, wobei die Fettkomponente Sonnenblumenöl ist.

**5.** Verfahren nach einem vorangehenden Anspruch, wobei die Fettkomponente 2 bis 15 Gewichts-% der tiefgekühlten, belüfteten Süßspeise ausmacht.

**6.** Verfahren nach einem vorangehenden Anspruch, wobei die tiefgekühlte, belüftete Süßspeise einen Überlauf von 60 bis 200 % hat.

**7.** Verfahren nach einem vorangehenden Anspruch, wobei das Protein 1 bis 8 Gewichts-% der tiefgekühlten, belüfteten Süßspeise ausmacht.

**8.** Verfahren nach einem vorangehenden Anspruch, wobei das Protein aus der Gruppe, bestehend aus Milchprotein, Sojaprotein, Weizenprotein, Gersteprotein und Lupinenprotein und Gemischen davon ausgewählt wird.

**9.** Verfahren nach Anspruch 8, wobei das Protein Milchprotein ist.

**10.** Verfahren nach einem vorangehenden Anspruch, wobei das Süßungsmittel 10 bis 35 Gewichts-% der tiefgekühlten, belüfteten Süßspeise bildet.

**11.** Verfahren nach einem vorangehenden Anspruch, wobei die freien Zucker weniger als 17 Gewichts-% der tiefgekühlten, belüfteten Süßspeise ausmachen.

**12.** Verfahren nach einem vorangehenden Anspruch, wobei die tiefgekühlte, belüftete Süßspeise keinen Emulgator enthält.

**Revendications**

**1.** Procédé de préparation d'un dessert aéré congelé comprenant les étapes consistant à :

a) produire un mélange comprenant de l'eau, un composant gras dans lequel au moins 35 % en poids des acides gras dans le composant gras sont des acides gras polyinsaturés, une protéine et un édulcorant ;
b) homogénéiser et pasteuriser le mélange ; et
c) congeler et aérer le mélange dans un congélateur à crèmes glacées pour obtenir un dessert aéré partiellement congelé ;

**caractérisé en ce que**, après l'étape c), le dessert aéré partiellement congelé est, en outre, congelé dans une extrudeuse basse température, et dans lequel le dessert aéré congelé quitte l'extrudeuse basse température à une température inférieure à -9°C.

**2.** Procédé selon la revendication 1, dans lequel l'extrudeuse basse température est une extrudeuse monovis ou bivis.

**3.** Procédé selon l'une quelconque des revendications précédentes, dans lequel le composant gras comprend au moins 80 % en poids de la matière grasse d'une huile végétale choisie dans le groupe constitué par l'huile de graines de tournesol, l'huile de carthame, l'huile de lin, l'huile de soja, l'huile de noix, l'huile de mais, l'huile de pépins de raisin, l'huile de sésame, l'huile de germes de blé, l'huile de graines de coton et leurs mélanges.

**4.** Procédé selon la revendication 3, dans lequel le composant gras est l'huile de tournesol.

**5.** Procédé selon l'une quelconque des revendications précédentes, dans lequel le composant gras représente de 2 à 15 % en poids du dessert aéré congelé.

**6.** Procédé selon l'une quelconque des revendications précédentes, dans lequel le dessert aéré congelé a un foisonnement de 60 à 200 %.

**7.** Procédé selon l'une quelconque des revendications précédentes, dans lequel la protéine représente de 1 à 8 % en poids du dessert aéré congelé.

**8.** Procédé selon l'une quelconque des revendications précédentes, dans lequel la protéine est choisie dans le groupe constitué par la protéine de lait, la protéine de soja, la protéine de blé, la protéine d'orge et la protéine de lupin et leurs mélanges.

**9.** Procédé selon la revendication 8, dans lequel la protéine est la protéine de lait.

**10.** Procédé selon l'une quelconque des revendications précédentes, dans lequel l'édulcorant représente de 10 à 35 % en poids du dessert aéré congelé.

**11.** Procédé selon l'une quelconque des revendications précédentes, dans lequel les sucres libres représentent moins de 17 % en poids du dessert aéré congelé.

**12.** Procédé selon l'une quelconque des revendications précédentes, dans lequel le dessert aéré congelé ne contient pas d'émulsifiant.

Figure 1

Figure 2

Figure 3

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9730600 A
- EP 1212948 A
- JP 57036944 A
- US 5345781 A
- WO 0072697 A

### Non-patent literature cited in the description

- Ice Cream. Kluwer Academic / Plenum Publishers, 2003
- **FRANK D GUNSTONE ; JOHN L HARWOOD ; FRED B PADLEY.** The Lipid Handbook. Chapman & Hall, 1994
- Diet, nutrition and the prevention of chronic diseases. *Report of a Joint WHO/FAO Expert Consultation,* 2003
- Ice Cream. 85-86
- Ice Cream. 190
- **C. CLARKE.** The Science of Ice Cream. Royal Society of Chemistry, 2004, 81-82